# EUROPEAN PATENT APPLICATION

(11) **EP 3 335 864 A1**
(43) Date of publication of application: **20.06.2018**
(21) Application number: 15900935.6
(22) Date of filing: 31.12.2015
(51) Int. Cl.: B29C 69/02, B29C 47/02, B29C 43/24, B29L 23/00

(54) **METHOD AND DEVICE FOR JET-PACKING MOULDING POLYMER PIPELINE**

(30) Priority: 12.08.2015 CN 201510494014
(71) Applicant: South China University of Technology, Guangzhou, Guangdong 510640 (CN); Guangzhou Huaxinke Intelligent Manufacturing Technology Co., Ltd., Guangzhou Guangdong 510663 (CN)
(72) Inventor: QU, Jinping, Guangzhou Guangdong 510640 (CN)
(74) Representative: Kolster Oy Ab
(86) International application number: PCT/CN2015/100077
(87) International publication number: WO 2017/024746

(57) **Abstract**

A method and a device for jet-packing moulding a polymer pipeline. During the spiral winding stack moulding process, a pipeline is continuously moulded by embedding a melt in a moulded pipe blank under the conjunction of the jetting welding effect produced by the melt and the shaping effect of partial calendering. The device therefor comprises an extruder (1), a melt jetting mechanism (3), a partial calendering mechanism and a pipe diameter shaping and adjusting mechanism, wherein the melt jetting mechanism (3) is arranged at the extrusion end of the extruder (1) and is embedded in a moulded pipe blank; the partial calendering mechanism and the pipe diameter shaping and adjusting mechanism are distributed on the wall of the pipe blank in the circumferential direction; the partial calendering mechanism is arranged at the corresponding position of the melt jetting mechanism; the melt jetting mechanism is located inside the pipe wall; the partial calendering mechanism is located outside the pipe wall; and a constrained space is formed between the partial calendering mechanism and the melt jetting mechanism. The present invention can solve problems in the moulded polymer pipelines, for example, the moulding size is limited, the mould cost is high, the moulding technology is complex, the energy consumption is high, the mechanical property is poor, the moulding efficiency is low, and moulding raw materials are limited can be solved.

## Description

### FIELD OF THE INVENTION

The present invention relates to the technical field of polymer material processing and moulding, in particular to a method and a device for jet-packing moulding a polymer pipeline.

### BACKGROUND OF THE INVENTION

Compared with traditional pipelines such as metal pipelines, polymer pipelines are corrosion-resistant, easy to install, energy-saving, low in resistance for fluid delivery, environmentally friendly, less in heat loss for heat medium delivery, excellent in shock resistance, light in weight, low in the overall cost of transportation, construction and maintenance, fast and reliable for connection, long in service life and low in cycle costs, high in productivity, suitable for industrial mass production, rich in raw material resources, recyclable, etc.. Therefore, the polymer pipelines are widely used in the fields such as water supply and drainage, natural gas transportation, building heating, power communication sheathing pipelines and water-saving irrigation.

Currently, the technique that can be used to mould polymer pipelines includes extrusion moulding and winding welding moulding.

With a special die needed in extrusion moulding, large extruders and extrusion dies are needed for moulding a large-diameter pipeline; due to the orientation effect, extrusion-moulding the large-diameter pipeline produces less circumferential strength than the axial strength; besides, due to the large wall thickness of the large-diameter pipeline, it is more difficult to control the melt flow in the moulding process, which easily leads to the sagging phenomenon and moulding defects (such as shrinkage or bubbles), resulting in poor mechanical properties of the pipelines, and so it is difficult to mould the large-diameter pipeline directly by extrusion moulding; moreover, whenever a pipeline of a diameter is extruded, it is needed to replace the die, the extrusion equipment and the related auxiliary equipment, and so extrusion-moulding the large-diameter pipe has high cost and poor flexibility and other shortcomings.

Winding welding moulding includes the following steps: first, extruding a plastic strip with a certain cross section (a strip of pure plastics or composite materials); then, winding the plastic strips onto a mandrel die in a lapped manner by means of a winding device; and then, locally heating the plastic strips and spraying adhesive between the same (or directly winding the molten plastic strips onto the mandrel die, or directly winding a small-diameter plastic pipeline having plastic melt on the outer surface), and compacting by a roller, so as to weld and compound the sample strips together; and finally, removing the mandrel die to obtain the final moulded pipeline. The Krahag Company of Germany and the invention application with the publication number CN101380819A disclose a method for winding and welding large-diameter pipelines; however, this method requires pre-moulding a small-diameter pipeline, during which the small-diameter pipeline is first coated with plastic melt and then wound onto a mandrel; a special mandrel die needs to be used in winding moulding, and the mandrel die needs to be replaced whenever a pipeline of a diameter is moulded, with a secondary heating device needed in moulding; in addition, welding traces exist in moulding among the melt material strips and the small-diameter pipelines; therefore, this moulding method has the disadvantages including complicated winding process, poor flexibility, high energy consumption, high material consumption, large flow resistance, easy leakage and low bearing pressure.

For this, in view of the existing problems in polymer pipeline moulding, it is necessary to develop a new method and device which has the advantages of flexible moulding, high mechanical properties of moulded products, low cost, good surface quality, low energy consumption, simple process and high production efficiency.

### CONTENTS OF THE INVENTION

For overcoming the defects of the prior art, a purpose of the present invention is to provide a method for jet-packing moulding a polymer pipeline, so as to solve the problems in the moulded polymer pipelines, for example, the moulding size is limited, the mould cost is high, the moulding technology is complex, the energy consumption is high, the mechanical property is poor, the moulding efficiency is low, and moulding raw materials are limited.

Another purpose of the present invention is to provide a device for jet-packing moulding a polymer pipeline for implementing the above method.

A technical solution of the present invention is as follows: A method for jet-packing moulding a polymer pipeline is provided, in the process of spiral winding stack moulding (that is, the polymer melt spirally stacks in a certain space around a central axis under a certain pressure, and the spiral layers are wound together without gaps), a pipeline is continuously moulded by embedding a melt in a moulded pipe blank under the conjunction of the jetting welding effect produced by the melt and the shaping effect of partial calendering.

In the pipe moulding process, the polymer melt makes the continuous spiral winding movement, and the melt is jetted into the moulded pipeline by an embedded melt jetting mechanism to fuse with the preceding polymer and is shaped by the calendering effect of a partial calendering mechanism, with a continuous polymer pipeline moulded with the auxiliary aid of a pipe diameter shaping and adjusting mechanism and a rotary traction mechanism.

The device for jet-packing moulding a polymer pipeline of the present invention for implementing the above method comprises an extruder, a melt jetting mechanism, a partial calendering mechanism and a pipe diameter shaping and adjusting mechanism, wherein the melt jetting mechanism is arranged at the extrusion end of the extruder and embedded in a moulded pipe blank; the partial calendering mechanism and the pipe diameter shaping and adjusting mechanism are distributed on the wall of the pipe blank in the circumferential direction; the partial calendering mechanism is arranged at the corresponding position of the melt jetting mechanism; the melt jetting mechanism is located inside the pipe wall; the partial calendering mechanism is located outside the pipe wall; and a constrained space is formed between the partial calendering mechanism and the melt jetting mechanism.

The melt jetting mechanism, as an embedded feed nozzle, extends into a constrained space when the pipeline is moulded, and is embedded inside the pre-moulded pipe melt to create a jet.

A frame is arranged on the bottom of the extruder, a mounting plate is arranged on the side of the frame at the extrusion end of the extruder, and the melt jetting mechanism, the partial calendering mechanism and the pipe diameter shaping and adjusting mechanism are respectively installed on a mounting plate.

The pipe blank is also provided on the periphery with a rotary traction mechanism including a spiral traction member and a support rod, and with a plurality of spiral traction members that are respectively connected to the mounting plate through the corresponding support rods. The rotary traction mechanism tracts the pipe blank, and drives the moulded pipe blank to make the spiral movement, so as to form a continuous polymer pipeline.

The partial calendering mechanism comprises a driving calendering roller, a driven calendering roller and a drive motor, the driving calendering roll and the driven calendering roller being respectively arranged on the inner and outer sides of the pipe blank, the driving calendering roll being connected with the drive motor, the melt jetting mechanism being provided in a space between the driving calendering roll and the driven calendering roller. The two calendering rollers play the role of local calendering and shaping; the calendering roller is externally connected with a temperature regulation system; and the calendering roll can be adjusted in position, that is, the position of the calendering roll can be adjusted without changing the calendering roll by the function of the adjustment members, and the position of the shaping roll can be automatically adjusted in the direction of the pipe diameter by the pipe diameter shaping and adjusting mechanism, so as to get the pipelines with different diameter and wall thickness moulded.

An adjustment member is also provided above the partial calendering mechanism for adjusting the thickness of the pipe wall.

The driving calendering roll and the driven calendering roller are also externally connected with a temperature regulation system.

The pipe diameter shaping and adjusting mechanism comprises a plurality of shaping roller sets and adjustment members, which correspond one by one and are distributed along the circumferential direction of the pipe blank. In the center of the pipe blank is provided an Archimedes spiral hook groove cam mechanism, to which are connected the respective shaping roller sets and the corresponding adjustment members, thus shaping the pipelines of different diameter and wall thickness.

The plurality of shaping roller sets, having the same structure, each comprise an inner shaping roller arranged inside the pipe blank and an outer shaping roller arranged outside the pipe blank, with a constraint spring arranged between the inner shaping roller and the outer shaping roller.

The principle of using the above device for jet-packing moulding a polymer pipeline is as follows: During moulding, the polymer melt provided by the extruder is jetted into the constrained space through a nozzle; during the melt is jetted, the partial calendering mechanism calendars the melt in rotation; after a section of pipe is moulded under the guidance of the shaping roller in the pipe diameter shaping and adjusting mechanism, the pipe spirally moves forward under the joint action of the rotary traction mechanism and the pipe diameter shaping and adjusting mechanism, thus moulding a continuous pipe. Wherein the pipe blank is originally driven to rotate by two calendering rollers in the partial calendering mechanism, and the pipe is continuously moulded by the thread drive between the spiral traction member and the pipe surface.

The present invention has the following beneficial effects compared to the prior art:
1. This method and device for jet-packing moulding a polymer pipeline can be used to mould large-diameter polymer pipelines.
2. Compared with the traditional polymer extrusion moulding, this device for jet-packing moulding a polymer pipeline does not require an extrusion die, with the quality of the moulded large-diameter pipelines reaching or even surpassing that of the pipelines moulded with a die.
3. When this method and device for jet-packing moulding a polymer pipeline is used for moulding a pipeline, an embedded nozzle jets polymer melt to produce local pressure, so that the pre-moulded pipeline and the post-moulded pipeline are fully fused together to greatly reduce the weld marks, and therefore the mechanical properties of the moulded polymer pipeline are fundamentally improved compared with those of the polymer pipeline by winding welding moulding.
4. This method for jet-packing moulding a polymer pipeline can be used for flexibly moulding a pipeline, that is, the pipelines of a variety of different diameter and wall thickness can be produced by only locally changing the relative position of key members without having to change the extruder.
5. With respect to the traditional large-diameter pipeline moulding, when this method and device for jet-packing moulding a polymer pipeline is used for moulding a pipeline, the pipeline is moulded along the circumference of the pipeline as a result of the jetting welding effect and the calendering partial shaping effect, making the pipeline have the circumferential strength greater than the axial strength and have a certain degree of self-enhancement effect.
6. By this method and device for jet-packing moulding a polymer pipeline, large-diameter polymer pipelines are prepared directly from the melt without going through intermediate steps, and can reduce energy consumption relative to the winding moulding; using an extruder having low plasticizing ability to mould a large-diameter pipeline can reduce the investment in large equipment; and no die is needed in the moulding process, reducing the product costs.

### BRIEF DESCRIPTION OF THE DRAWINGS

Fig. 1 is a schematic view of the structure of the device for jet-packing moulding a polymer pipeline.
Fig. 2 is a partial enlarged view of the embedded feed nozzle in Fig. 1.
Fig. 3 is a position relationship diagram of the partial calendering mechanism and the feed nozzle.
Fig. 4 is a schematic diagram of the pipe diameter shaping and adjusting mechanism.

### DETAILED DESCRIPTION OF THE EMBODIMENTS

The present invention will be further described in detail below with reference to examples; however, the embodiments of the present invention are not limited thereto.

### Example:

This example shows a method and a device for jet-packing moulding a polymer pipeline, whose melt supply device is an extruder.

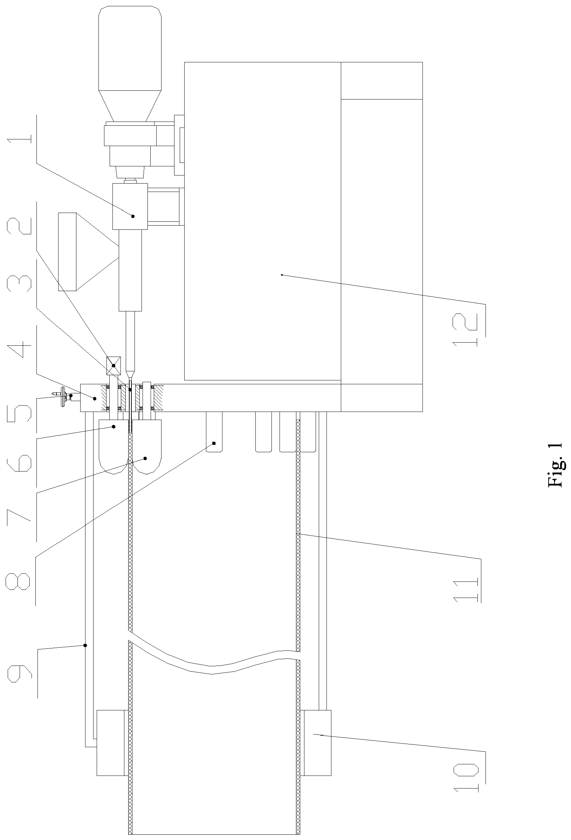

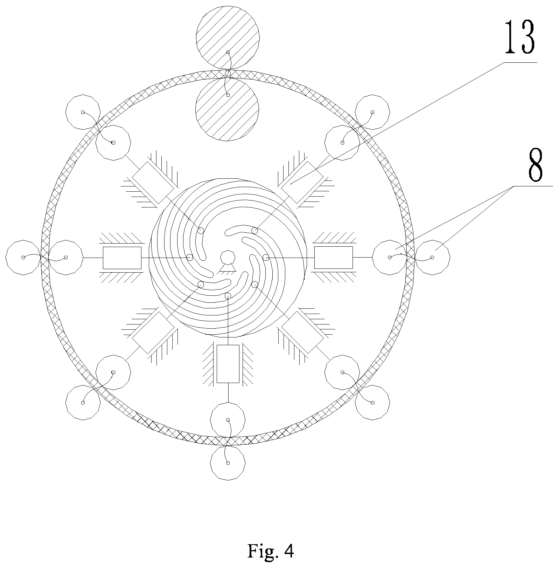

As shown in Figs. 1 or 4, this device for jet-packing moulding comprises an extruder 1 (as a polymer melt supply device), an embedded feed nozzle 3 (as a melt jetting mechanism), a driving calendering roll 6, a driven calendering roll 7, a drive motor 2, a rotary traction mechanism, a frame 12 and a pipe diameter shaping and adjusting mechanism. The driving calendering roll 6, the driven calendering roll 7 and the drive motor 2 compose a partial calendering mechanism; the rotary traction mechanism consists of a spiral traction member 10 and a support rod 9; the embedded feed nozzle 3 is connected with the extruder 1; the feed nozzle is also provided with a baffle 15, on which the embedded feed nozzle is fixed; the driving calendering roll 6 and the driven calendering roll 7 are respectively fixed on the mounting plate 4; the driving calendering roll 6, connected with the drive motor, can make active rotation movement; and the driving calendering roll 6 and the driven calendering roll 7 can be moved along the radial direction of the polymer pipeline; in the pipe diameter shaping and adjusting mechanism, the position of the shaping roller set 8 can be adjusted in the direction of the pipe diameter under the action of the adjustment member 13, as shown in Fig. 1; the extruder 1 and the mounting plate 4 are fixed on the frame 12.

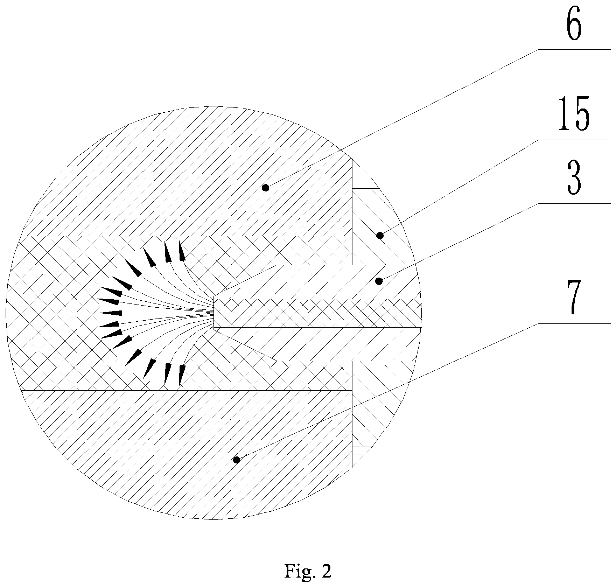

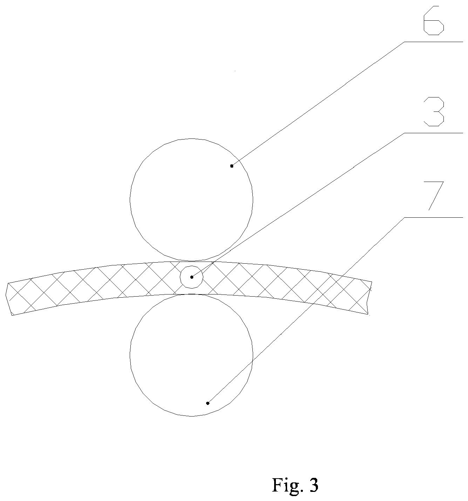

The extruder 1 extrudes the polymer melt of a certain pressure and temperature, which is jetted into a constrained space (consisting of the driving calendering roll 6, the driven calendering roll 7 and the baffle 15, as shown in Figs. 2 or 3) through the supply nozzle 3, with the feed nozzle extending into the melt; with the help of constraining, calendering and shaping effects of the two calendering rollers and under the action of the pipe diameter shaping and adjusting mechanism, the calendered plastic melt first forms a section of polymer pipeline along the shaping roller set 8 in the pipe diameter shaping and adjusting mechanism, which section of polymer pipeline spirally moves forward under the joint action of the spiral traction member 10 and the pipe diameter shaping and adjusting mechanism, with the subsequent polymer melt continuing to be jetted and stacked between the two calendering rollers and the initial polymer pipeline; in moulding, the feed nozzle is fixed, and the driving calendering roll 6 and the driven calendering roll 7 are rotated; under the action of pressure, the first moulded pipeline and the subsequently jetted melt are fully fused together, and form a continuous polymer pipeline 11 after cooling shaping. After a desired section of polymer pipeline is moulded, a cutting device is used to cut the pipeline. By repeating in this way, a length of polymer pipeline is moulded. An adjustment member 5 is also provided above the partial calendering mechanism for adjusting the thickness of the pipe wall. When the polymer pipeline changes in size such as diameter and wall thickness, the positions of the driving calendering roll 6, the driven calendering roll 7, the spiral traction member and the shaping roller set 8 on the mounting plate can be respectively adjusted as well as the position of the feed nozzle 3, thus moulding the pipelines of different specifications.

The present invention can be well implemented as described above. The examples as described above are only the preferred examples of the present invention, and are not intended to limit the scope thereof; that is, variations and modifications consistent with the present invention are intended to be encompassed by the scope of the present invention as claimed by the appended claims.

## Claims

1. A method for jet-packing moulding a polymer pipeline, **characterized in that**: during a spiral winding stack moulding process, a pipeline is continuously moulded by embedding a melt in a moulded pipe blank under the conjunction of a jetting welding effect produced by the melt and a shaping effect of partial calendering.

2. A device for jet-packing moulding a polymer pipeline for implementing the above method, **characterized in that**: the device comprises an extruder, a melt jetting mechanism, a partial calendering mechanism and a pipe diameter shaping and adjusting mechanism, wherein the melt jetting mechanism is arranged at an extrusion end of the extruder and is embedded in a moulded pipe blank; the partial calendering mechanism and the pipe diameter shaping and adjusting mechanism are distributed on the wall of the pipe blank in the circumferential direction; the partial calendering mechanism is arranged at a corresponding position of the melt jetting mechanism; the melt jetting mechanism is located inside the pipe wall; the partial calendering mechanism is located outside the pipe wall; and a constrained space is formed between the partial calendering mechanism and the melt jetting mechanism.

3. The device for jet-packing moulding a polymer pipeline according to claim 2, **characterized in that**: the melt jetting mechanism is an embedded feed nozzle.

4. The device for jet-packing moulding a polymer pipeline according to claim 2, **characterized in that**: a frame is arranged on the bottom of the extruder, a mounting plate is arranged on the side of the frame at the extrusion end of the extruder, and the melt jetting mechanism, the partial calendering mechanism and the pipe diameter shaping and adjusting mechanism are respectively installed on a mounting plate.

5. The device for jet-packing moulding a polymer pipeline according to claim 4, **characterized in that**: the pipe blank is also provided on the periphery with a rotary traction mechanism including a spiral traction member and a support rod, and with a plurality of spiral traction members that are respectively connected to the mounting plate through the corresponding support rods.

6. The device for jet-packing moulding a polymer pipeline according to claim 2, **characterized in that**: the partial calendering mechanism comprises a driving calendering roller, a driven calendering roller and a drive motor, the driving calendering roll and the driven calendering roller being respectively arranged on the inner and outer sides of the pipe blank, the driving calendering roll being connected with the drive motor, the melt jetting mechanism being provided in a space between the driving calendering roll and the driven calendering roller.

7. The device for jet-packing moulding a polymer pipeline according to claim 6, **characterized in that**: an adjustment member is also provided above the partial calendering mechanism for adjusting the thickness of the pipe wall.

8. The device for jet-packing moulding a polymer pipeline according to claim 6, **characterized in that**: the driving calendering roll and the driven calendering roller are also externally connected with a temperature regulation system.

9. The device for jet-packing moulding a polymer pipeline according to claim 2, **characterized in that**: the pipe diameter shaping and adjusting mechanism comprises a plurality of shaping roller sets and adjustment members, which correspond one by one and are distributed along the circumferential direction of the pipe blank.

10. The device for jet-packing moulding a polymer pipeline according to claim 2, **characterized in that**: the plurality of shaping roller sets, having the same structure, each comprise an inner shaping roller arranged inside the pipe blank and an outer shaping roller arranged outside the pipe blank, with a constraint spring arranged between the inner shaping roller and the outer shaping roller.
